# EUROPEAN PATENT APPLICATION

(11) **EP 1 408 599 A2**
(43) Date of publication of application: **14.04.2004**
(21) Application number: 03103553.8
(22) Date of filing: 25.09.2003
(51) Int. Cl.: H02K 3/48

(54) **Armature bar mounting**

(30) Priority: 09.10.2002 GB 0223487
(71) Applicant: ALSTOM Technology Ltd, 5400 Baden (CH)
(72) Inventor: Thiot, Denis, 90000, Belfort (FR); Joho, Reinhard, 5022, Rombach (CH)

(57) **Abstract**

A lateral ripple spring 30 is inserted between an armature bar 10 and the core. Conformable material 37 occupies void space between one side surface of the bar 10 and the corresponding side surface of the slot 20 in which the bar is mounted, so as to reduce the thermal resistance between the bar and the core. Conformable material 37 may be provided on the side opposite the ripple spring 30, as shown, and/or on the same side as the ripple spring.

## Description

This invention relates to electrical machines, such as generators, in which armature bars constituting windings are mounted in slots in a core. In particular it relates to electrical machines in which the windings are cooled indirectly (the heat produced in the conductors being removed through the bar insulation).

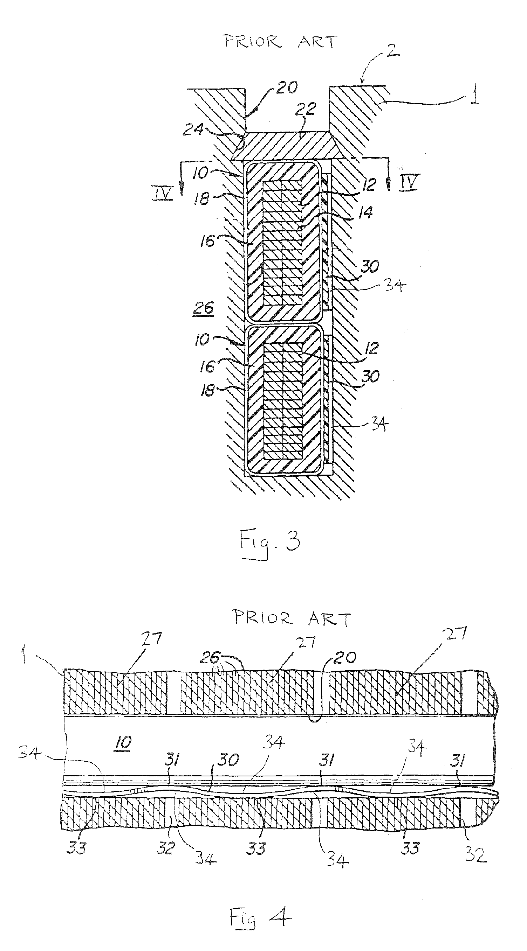

A known way of mounting armature bars in the stator core of a dynamoelectric machine is shown in Figures 3 and 4 of the accompanying drawings. The machine has an electrically grounded stator core 1 defining axially extending, circumferentially spaced, radially directed slots 20 (only one of which is shown). The stator core 1 defines a cylindrical bore 2 into which each slot 20 opens. A plurality of insulated electrical windings constituted by armature bars 10 are disposed axially in the slots.

As shown in Figure 3, two bars 10 are disposed in the slot 20. Each bar 10 includes a plurality of conductive elements or strands 12, each surrounded by a strand insulation 14. The bundle of strands is surrounded by a thick insulating layer 16 covered with a thin grounding layer 18 for bleeding off the electric charge which develops on the exterior surface of the insulating layer.

The two bars 10 are held in place by a slot wedge 22 cooperating with a dovetail groove 24. A top ripple spring and a filler (not shown) may be fitted between the upper bar and the wedge 22, and a further filler (not shown) may be provided between the two bars 10. Lateral ripple springs 30, which, as shown in Figure 4, may extend in the longitudinal direction of the slot 20, are arranged between one side of each bar 10 and the corresponding side surface of the slot 20. The lateral ripple spring 30 has crests 31 and 33 which contact the bar 10 and the core laminations 26 respectively, and has transverse troughs 34 which extend in the radial direction towards the open end of the slot 20. Alternatively, the troughs may extend axially or obliquely to the axial and radial directions. The laminations 26 are grouped in packages 27 with vent channels 32 for the passage of a gaseous coolant between them. A plurality of lateral ripple springs 30 are arranged in a series along the length of each bar 10. For mechanical reasons as well as tolerance, although the lateral ripple springs 30 are compressed in the installed state, the shallow troughs 34 remain and inevitably form voids which act as undesirable thermal barriers to heat removal from the bars 10.

JP-A-59-136039 discloses a ripple spring the troughs of which are filled with rubber-like elastic material. However, this has the disadvantage that the elastic material is necessarily put under compression when the ripple spring is inserted between the armature bar and the core. The confined body of material does not behave elastically. The slot clearance varies in practice, so that where the clearance is smaller the force of the filled ripple spring is excessive and where the clearance is larger there is insufficient thermal contact because voids remain unfilled.

It would be desirable to be able to enhance the indirect cooling of armature bars.

In one aspect, the present invention provides an electrical machine including an armature bar mounted in a slot in a core, a lateral ripple spring being inserted between the bar and the core, wherein conformable material occupies void space between one side surface of the bar and the corresponding side surface of the slot so as to reduce the thermal resistance between the bar and the core, the conformable material filling the void space and being substantially uncompressed.

In another aspect, the invention provides a method of mounting an armature bar in a slot in a core, the method including inserting a lateral ripple spring between the bar and the core, providing a flowable precursor of a conformable material in void space between one side surface of the bar and the corresponding side surface of the slot so that the precursor fills the void space, and allowing the precursor to cure to form the conformable material in the void space so as to reduce the thermal resistance between the bar and the core.

The invention will be described further, by way of example only, with reference to the accompanying drawings, in which:
Figure 1 is a schematic cross-section through a slot in a stator core, showing one embodiment of the invention;
Figure 2 is a view similar to Figure 1, showing another embodiment;
Figure 3 is a cross-section through a slot in a stator core according to the prior art; and
Figure 4 is a view taken on line IV-IV in Figure 3.

Throughout the drawings, similar parts are indicated by the same reference numbers.

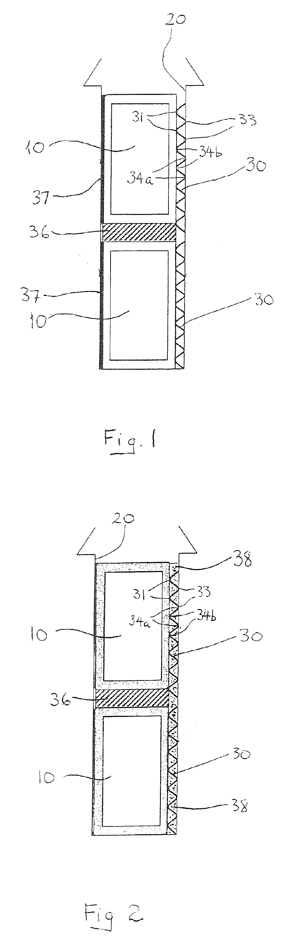

In the embodiment shown in Figure 1, the two armature bars 10 are separated from each other by a conventional filler 36. Inner troughs 34a between the inner crests 31 of the lateral ripple springs 30 and outer troughs 34b between the outer crests 33 extend along the longitudinal direction of the bars 10 (perpendicular to the plane of the drawing). The lateral ripple springs may be made of fibre-reinforced plastics material. Preferably they are electrically conductive.

Conformable material 37 between the side surface of each bar 10 and the corresponding side surface of the slot 20, on the opposite side of the bar to the lateral ripple spring 30, may fill a residual gap due to the surface conditions. The conformable material 37, which is resiliently compressible, and the lateral ripple spring 30, which is resiliently deformable, limit the vibrations of the bar 10 caused by the electromagnetic forces in the windings. Furthermore, the conformable material is a better conductor of heat than the void space which would otherwise exist between the bar 10 and the stator core laminations and therefore reduces the thermal resistance between the bar and the core.

The conformable material may be in the form of a layer formed on the bar surface, a layer formed on the slot surface, or both. Alternatively, the conformable material may be in the form of a pad inserted between the bar and the core. By way of example, the pad may be reinforced by a carrier, e.g. a polyester or glass mesh. The skilled reader will appreciate that a wide range of materials are suitable for use as the conformable material and that the conformable material may be provided between the bar and the core by many different processes. The comfortable material fills the voids. It may cure to a fmal state at room temperature or on heating.

In an application example, a layer of a flowable precursor of the conformable material could be applied to the side surface of the bar and/or the side surface of the slot before the bar is positioned in this slot. The layer of the precursor of the conformable material could be spread on the bar surface and/or the slot surface. Another possibility is to inject a flowable precursor of the conformable material between the bar surface and the slot surface, for instance via the open end of the slot or via the vent channels of the core. The precursor may cure at room temperature or on heating.

In the embodiment shown in Figure 2, conformable material 38 (which may be the same as or different from the conformable material 37) is provided on the same side of the bars 10 as the lateral ripple springs 30. The conformable material 38 fills the inner troughs 34a and the outer troughs 34b of the ripple spring 30. Like the conformable material 37, the conformable material 38 reduces the thermal resistance between the bar and the core.

While it is possible to provide the conformable material 38 by filling the troughs of the lateral ripple spring with a flowable precursor of the conformable material, before the lateral ripple spring is positioned in the slot, it is also possible for the conformable material 38 to be provided by injecting a flowable precursor of the conformable material between the bar surface and the slot surface after the bar and the ripple spring have been positioned in the slot. The precursor may be injected via the open end of the slot and/or via the vent channels of the core.

In the embodiment illustrated, in which the lateral ripple spring has longitudinal troughs extending longitudinally of the bar, the precursor is preferably injected via the vent channels, at least a proportion of the precursor being injected beyond at least one longitudinal end of the ripple spring, so that the precursor flows into all of the troughs in the ripple spring. In an alternative embodiment, in which the ripple spring troughs extend transversely or obliquely across the ripple spring towards the open end of the slot, the precursor is preferably injected via the open end of the slot.

Alternatively, it is possible to apply a controlled amount of the flowable precursor to the ripple spring before installing it. Preferably, the precursor is applied to the parts of the ripple spring within the troughs on both sides of the ripple spring.

The amount applied (before or after installation) may be limited in accordance with the measured clearance between the bar surface and the slot surface so as to minimise waste of the precursor material. In particular, the amount applied should be insufficient to fill the troughs of the relaxed ripple spring but should be such that the material is flush with the crests of the ripple spring when it is in its compressed installed state.

In a further embodiment (not illustrated), the embodiments of Figures 1 and 2 are combined so that there is conformable material 37 on one side of the bar 10 and conformable material 38 on the side provided with the lateral ripple spring 30.

The conformable material 37 or 38 may be any suitable material having a thermal conductivity higher than that of the cooling gas (typically air). Electrical semiconductive properties may be of advantage for certain applications. The material preferably has an enduring elasticity in the installed state. Materials based on silicones, graphites, polytetrafluroethylene, rubbers, and the like, could be used in the form of more or less filled resins, glues, greases, tapes, or pads, for example.

It will be appreciated that since the precursor remains in a flowable state (generally being of a paste-like or putty-like consistency) during the insertion of the armature bars and ripple springs or during injection of the precursor after insertion, the precursor will flow to fill voids between the bars and the core and will subsequently cure while under no pressure, with the consequence that the resulting conformable material fills the voids while remaining substantially uncompressed.

## Claims

1. An electrical machine including an armature bar mounted in a slot in a core, a lateral ripple spring being inserted between the bar and the core, wherein conformable material occupies void space between one side surface of the bar and the corresponding side surface of the slot so as to reduce the thermal resistance between the bar and the core, the conformable material filling the void space and being substantially uncompressed.

2. An electrical machine as claimed in claim 1, in which the conformable material is on the side of the bar opposite to the lateral ripple spring.

3. An electrical machine as claimed in claim 1, in which the conformable material is on the same side of the bar as the lateral ripple spring.

4. An electrical machine as claimed in claim 3, in which the conformable material occupies troughs on at least one side of the lateral ripple spring.

5. An electrical machine as claimed in claim 4, in which the said troughs extend along the longitudinal direction of the bar.

6. An electrical machine as claimed in claim 4, in which the said troughs extend transversely or obliquely to the longitudinal direction of the bar.

7. An electrical machine as claimed in any preceding claim, in which there is conformable material on both sides of the bar.

8. An electrical machine as claimed in any preceding claim, in which the lateral ripple spring is electrically conductive.

9. An electrical machine as claimed in any preceding claim, in which the lateral ripple spring is made of plastics material.

10. An electrical machine as claimed in any preceding claim, in which the conformable material has enduring elasticity.

11. A method of mounting an armature bar in a slot in a core, the method including inserting a lateral ripple spring between the bar and the core, providing a flowable precursor of a conformable material in void space between one side surface of the bar and the corresponding side surface of the slot so that the precursor fills the void space, and allowing the precursor to cure to form the conformable material in the void space so as to reduce the thermal resistance between the bar and the core.

12. A method as claimed in claim 11, including providing a layer of the precursor on the said one side surface of the bar before the bar is positioned in the slot.

13. A method as claimed in claim 11 or 12, including providing a layer of the precursor on the said corresponding side surface of the slot before the bar is positioned in the slot.

14. A method as claimed in claim 11, in which, after the bar and the lateral ripple spring have been positioned in the slot, the precursor is injected between the said one side surface of the bar and the corresponding surface of the slot.

15. A method as claimed in claim 14, in which the precursor is injected via the open end of the slot.

16. A method as claimed in claim 15, in which the lateral ripple spring has transverse or oblique troughs extending towards the open end of the slot, the precursor being injected into the gap containing the lateral ripple spring.

17. A method as claimed in claim 14, in which the precursor is injected via vent channels of the core.

18. A method as claimed in claim 17, in which the lateral ripple spring has longitudinal troughs extending longitudinally of the bar, the precursor being injected into the gap containing the lateral ripple spring.

19. A method as claimed in claim 18, in which at least a proportion of the precursor is injected beyond at least one longitudinal end of the lateral ripple spring.

20. A method as claimed in claim 16 or 18, in which the amount of precursor injected is just sufficient to fill the troughs of the installed lateral ripple spring.

21. A method as claimed in claim 11, including applying the precursor to troughs on at least one side of the lateral ripple spring before inserting it between the bar and the core.

22. A method as claimed in claim 21, in which the amount precursor applied is just sufficient to fill the troughs when the lateral ripple spring has been inserted between the bar and the core.

23. A method as claimed in claim 14, 18, 20, 21, or 22, including measuring the clearance between the bar surface and the slot surface between which the lateral ripple spring is to be inserted, after the bar has been positioned in the slot, and determining the amount of precursor to be applied or injected on the basis of the measured clearance.
